# EUROPEAN PATENT APPLICATION

(11) **EP 3 836 628 A1**
(43) Date of publication of application: **16.06.2021**
(21) Application number: 18929336.8
(22) Date of filing: 07.08.2018
(51) Int. Cl.: H04W 40/02, H04W 84/22

(54) **RADIO NODE AND RADIO COMMUNICATION METHOD**

(71) Applicant: NTT DOCOMO, INC., Chiyoda-ku Tokyo 100-6150 (JP)
(72) Inventor: HARADA, Hiroki, Tokyo 100-6150 (JP); OHARA, Tomoya, Tokyo 100-6150 (JP)
(74) Representative: Hoffmann Eitle
(86) International application number: PCT/JP2018/029655
(87) International publication number: WO 2020/031269

(57) **Abstract**

A radio node that is a first radio node among a plurality of radio nodes, includes: a reception section that receives at least one of first information indicating qualities of a plurality of candidate links between the first radio node and a second radio node, and second information indicating congestion degrees of the candidate links, through any of the candidate links; and a control section that determines a candidate link used for establishing connection among the plurality of candidate links, based on at least one of the first information and the second information that are received.

## Description

### Technical Field

The present invention relates to a radio node and a radio communication method.

### Background Art

Long Term Evolution (LTE) has been specified for achieving a higher data rate, lower latency, and the like in a Universal Mobile Telecommunications System (UMTS) network. Successor systems of LTE have also been studied for achieving a broader bandwidth and a higher speed based on LTE. Examples of successor systems of LTE include the systems called LTE-Advanced (LTE-A), Future Radio Access (FRA), 5th generation mobile communication system (5G), 5G plus (5G+), New Radio (NR), and the like.

As to the future radio communication system (for example, 5G), a technique of Integrated Access and Backhaul (IAB) that integrates access links and backhaul (BH) links has been studied (NPL1). In IAB, a radio node, such as an IAB node, forms a radio access link with a user terminal (User Equipment (UE)), and forms a radio backhaul link with another IAB node and/or radio base station.

### Citation List

### Non-Patent Literature

NPL 1
   3GPP TR 38.874 V0.3.2 "3rd Generation Partnership Project; Technical Specification Group Radio Access Network; Study on Integrated Access and Backhaul (Release 15)", June 2018
NPL 2
   "Draft Report of 3GPP TSG RAN WG1 #93 v0.1.0", Busan, South Korea, 21st - 25th May 2018
NPL 3
   3GPP TS38.213 V15.2.0 "3rd Generation Partnership Project; Technical Specification Group Radio Access Network; NR; Physical layer procedures for control (Release 15)", June 2018
NPL 4
   3GPP TS38.331 V15.2.1 "3rd Generation Partnership Project; Technical Specification Group Radio Access Network; NR; Radio Resource Control (RRC) protocol specification(Release 15)", June 2018

### Summary of Invention

### Technical Problem

However, the discussion for allowing the radio node, such as the IAB node, to select an appropriate BH link is insufficient. Accordingly, further discussion is required.

An object of an aspect of this disclosure is to provide a radio node and a radio communication method that select an appropriate BH link.

### Solution to Problem

A radio node according to one aspect of the present disclosure is a first radio node among a plurality of radio nodes, the radio node including: a reception section that receives at least one of first information indicating qualities of a plurality of candidate links between the first radio node and a second radio node, and second information indicating congestion degrees of the candidate links, through any of the candidate links; and a control section that determines a candidate link used for establishing connection among the plurality of candidate links, based on at least one of the first information and the second information that are received.

### Advantageous Effects of Invention

According to this disclosure, an appropriate BH link can be selected.

### Brief Description of Drawings

FIG. 1 illustrates an exemplary configuration of a radio communication system according to an embodiment of the invention;
FIG. 2 illustrates an exemplary configuration of an IAB node according to an embodiment of the invention;
FIG. 3 illustrates Time Division Multiplex (TDM) in a radio communication system according to an embodiment of the invention;
FIG. 4 illustrates an example of the IAB node selecting a link connection destination according to an embodiment of the invention;
FIG. 5 illustrates an example of an IAB donor selecting a link connection destination according to an embodiment of the invention; and
FIG. 6 illustrates an example of a hardware configuration of the IAB donor, the IAB node and the user terminal according to an embodiment of the invention.

### Description of Embodiments

Hereinafter, an embodiment of this disclosure will be described with reference to the accompanying drawings.

### <System Configuration>

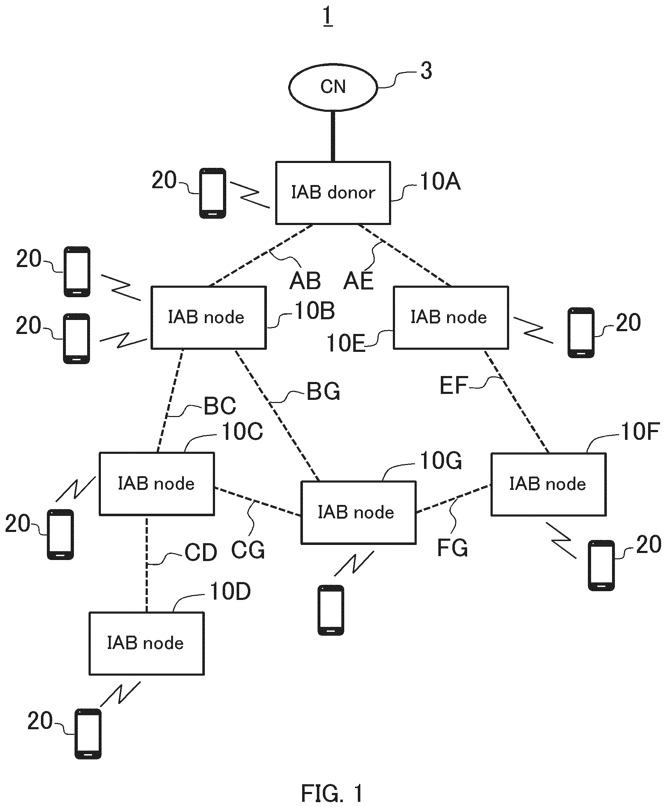

FIG. 1 illustrates an exemplary configuration of a radio communication system according to an embodiment.

Radio communication system 1 includes IAB donor 10A, IAB nodes 10B to 10G, and UE 20, which is an example of a user terminal. Hereinafter, when IAB nodes 10B to 10G are described without discrimination from each other, only common numbers of the reference signs, as in "IAB node 10," may be used. The representation of "IAB node 10" may include IAB donor 10A.

IAB donor 10A is an example of a radio node, and is connected to Core Network (CN) 3 via a wire cable (for example, an optical fiber cable). IAB donor 10A may be connected to CN 3 through radio communication. The representation of "donor" is an example. Alternatively, the representation may be a core, a route, an endpoint, a node or the like, for example.

IAB nodes 10B to 10G are examples of radio nodes, and are connected to another IAB node 10 (or IAB donor 10A) through radio communication. In the example in FIG. 1, IAB nodes 10B and 10E are connected to IAB donor 10A. Furthermore, IAB node 10C is connected to IAB node 10B. Furthermore, IAB node 10D is connected to IAB node 10C. Moreover, IAB node 10F is connected to IAB node 10E. Hereinafter, from the standpoint of certain IAB node 10, (upstream) IAB node 10 near to IAB donor 10A in the link connection is called a higher IAB node. The higher IAB node may be IAB donor 10A. From the standpoint of certain IAB node 10, a (downstream) IAB node apart from IAB donor 10A in the link connection is called a lower IAB node.

IAB donor 10A and IAB nodes 10B to 10G each form a cell that is an area allowing radio communication. That is, IAB node 10 has a function as a base station. UE 20 in the cell can be connected by radio to IAB node 10 that forms the cell.

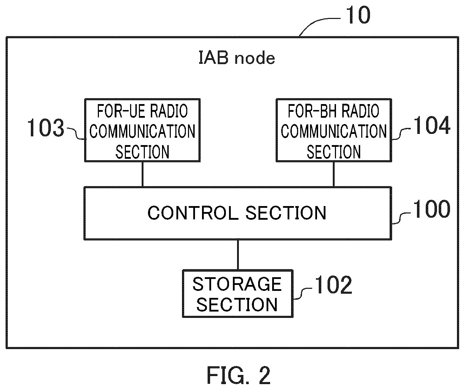

FIG. 2 illustrates an exemplary configuration of IAB node 10.

As illustrated in FIG. 2, IAB node 10 includes control section 100, storage section 102, for-UE radio communication section 103, and for-BH radio communication section 104.

For-UE radio communication section 103 processes radio communication with UE 20.

For-BH radio communication section 104 processes radio communication with another IAB node 10.

Control section 100 controls radio communication of for-UE radio communication section 103. Control section 100 controls radio communication of for-BH radio communication section 104. The details of the operation of control section 100 are described later.

Storage section 102 stores various pieces of information used for the operation of control section 100.

Although not illustrated, IAB donor 10A may further include a for-CN communication section that processes communication with CN 3, besides the configuration elements illustrated in FIG. 2.

### <Discussion>

As for the radio communication system pertaining to IAB, the following (A1) and (A2) are considered.
(A1) Given IAB node 10 has a constraint of half duplex communication. Accordingly, cell detection and measurement by the access UE, and detection and measurement of the candidate BH link (after initial access) by this IAB node 10 are performed in different (orthogonal) time resources. The candidate BH link indicates, for example, a BH link serving as a candidate for which this IAB node 10 establishes the BH link. The detection and measurement of the candidate BH link by this IAB node 10 can be understood as detection and measurement of the IAB node and/or IAB donor around IAB node 10 concerned.
(A2) For the detection and measurement of the candidate BH link by the IAB node, the following is considered.
   - TDM of Synchronization Signal Block (SSB) (for example, depending on hop order, cell ID and the like)
   - SSB muting across IAB nodes
   - Multiplexing between SSB of access UE and SSB of IAB in a time domain in a half-frame or across multiple half-frames
   - Additional IAB node discovery signal TDM which is TDMed with SSB (for example, a channel state information reference signal (CSI-RS))
   - Use of off-raster SSB. That is, use of a frequency without UE's detection.
   - Difference in transmission periodicity in a case of comparison with the periodicity of use by the access UE.

As described in (A1) above, a given IAB node has a constraint of half duplex communication. Accordingly, the following is discussed.
- In IAB, the in-band backhaul and the out-of-band backhaul are study items. The in-band backhaul means a BH link that uses a frequency carrier identical to that of the access link. The out-of-band backhaul means a BH link that uses a frequency carrier different from that of the access link.
- In the in-band backhaul, the access link and the BH link use the same frequency carrier. Accordingly, IAB node 10 is not available to receive a signal in the BH link while transmitting a signal in the access link, and is also not available to transmit a signal in the BH link while receiving a signal in the access link.

As indicated in (A1), the resources used by the access UE are orthogonal in time domain. Accordingly, the following is discussed.
- In consideration of the constraint of half duplex communication described above, the candidate BH link detection and/or measurement (that is, detection and measurement of the neighboring IAB node and/or IAB donor) is not available in the resource for transmitting SSB and/or CSI-RS to UE. This is because SSB and/or CSI-RS are being transmitted to UE in this resource.
- Consequently, discovery between IAB nodes (inter-node discovery) is made in a time resource different from that for transmitting SSB and/or CSI-RS to UE.

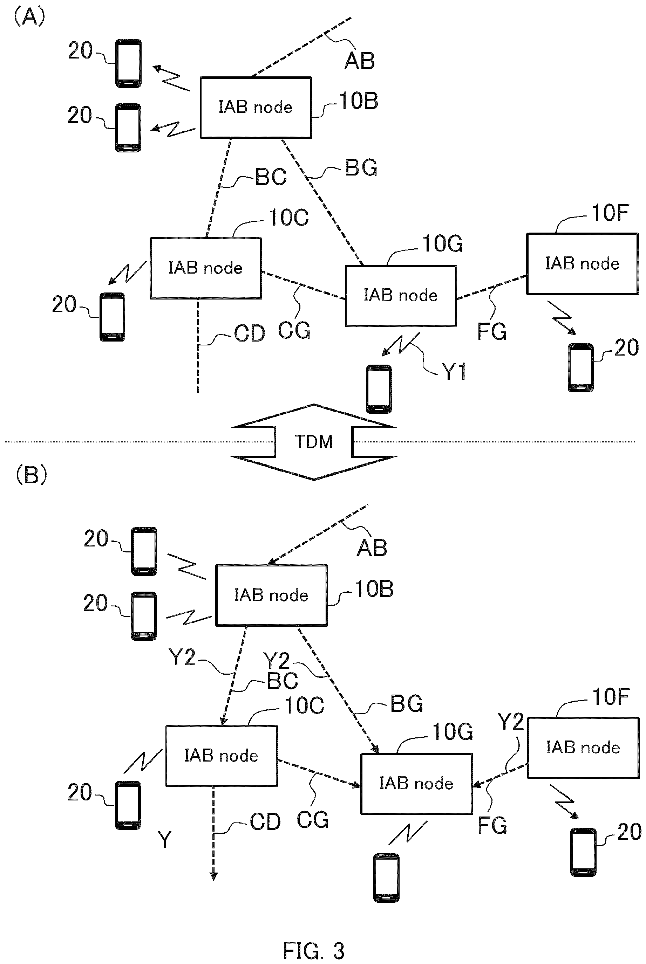

Referring to FIG. 3, an example pertaining to the constraint of half duplex communication is described. FIG. 3 partially illustrates the radio communication system illustrated in FIG. 1. In the case of constraint of half duplex communication, as illustrated in FIG. 3(A), IAB node 10G is not available to perform communication Y2 (see FIG. 3(B)) with other IAB nodes 10B, 10C and 10F while using the time resource for transmission Y1 of SSB and CSI-RS to access UE 20. On the other hand, as illustrated in FIG. 3(B), IAB node 10G is not available to perform communication Y1 (see FIG. 3(A)) with access UE 20 while using the time resource for communication Y2 pertaining to detection and measurement of the candidate BH link to other IAB nodes 10B, 10C and 10F.

Accordingly, (A2) described above is considered in detection and measurement of the candidate BH link by the IAB node.

However, there is a possibility that IAB node 10G is not available to select an appropriate BH link only by SSB and/or CSI-RS with other IAB nodes 10B, 10C and 10F. For example, in the case of FIGS. 1 and 3, IAB node 10G obtains information on link BG, which includes the link quality of link BG, using SSB and/or CSI-RS included in a received signal from IAB node 10B. Likewise, IAB node 10G obtains information on link CG, which includes the link quality of link CG, using SSB and/or CSI-RS included in a received signal from IAB node 10C. The link quality is represented by at least one of Reference Signal Received Power (RSRP), Reference Signal Received Quality (RSRQ) or Signal-to-noise and Interference Ratio (SINR), for example.

Accordingly, in the case of FIGS. 1 and 3, it is preferable that IAB node 10G select the BH link in consideration of at least one of the following (B1) to (B3) in addition to the link quality of link CG and/or link BG
(B1) The number of links from IAB node 10G to IAB donor 10A (the number of hops). According to this information, for example, IAB node 10G is possible to avoid selection of the link having the maximum number of links (or the number of hops) as the BH link, for example.
(B2) The comprehensive quality from IAB node 10G to IAB donor 10A. For example, the comprehensive quality of link AB, link BC and link CG, and the comprehensive quality of link AB and link BG Alternatively, the link having the lowest quality among the links from IAB node 10G to IAB donor 10A. According to this information, IAB node 10G is possible to avoid selection of the link having the lowest quality as the BH link, for example.
(B3) The comprehensive congestion degree from IAB node 10G to IAB donor 10A. For example, the comprehensive congestion degrees of link AB, link BC and link CG, and the comprehensive congestion degrees of link AB and link BG Alternatively, the resource utilization rate of the most congested link among the links from IAB node 10G to IAB donor 10A. According to this information, IAB node 10G is possible to avoid selection of the most congested link as the BH link, for example.

Next, as for (B1) to (B3) described above, an example where IAB node 10G selects the connection destination BH link, and an example where IAB donor 10A selects the BH link that is the connection destination of IAB node 10G are described in detail.

### <IAB node 10G selects link>

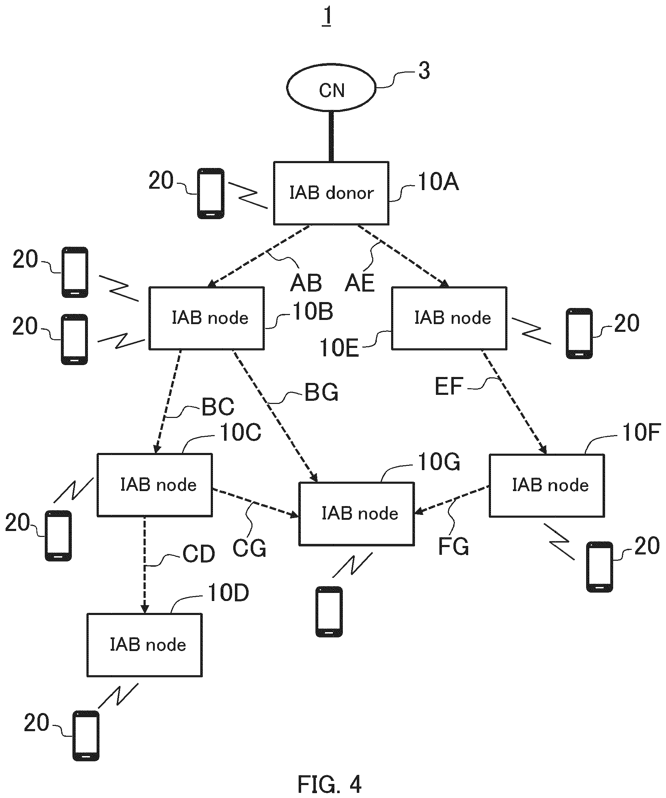

Referring to FIG. 4, an example where IAB node 10G selects the connection destination BH link from among candidate BH links is described. In the following description, for the sake of facilitating illustration, IAB nodes with specific reference signs (10C and 10G) are used. This is an example, and an IAB node with another reference sign may be adopted.

IAB node 10C transmits, to IAB nodes 10D and 10G, for example, at least one of information on the number of links, link quality information, and link congestion degree information from IAB node 10C to IAB donor 10A. Hereinafter, information including at least one of the information on the number of links, the link quality information, and the link congestion degree information is sometimes called "link-related information."

IAB node 10C may periodically transmit the link-related information as broadcast information. Alternatively, IAB node 10C may transmit the link-related information in a dedicated manner based on a request issued by lower IAB node 10G IAB node 10C may transmit the link-related information as a dedicated information based on a request issued by UE 20.

The link quality information is information indicating the link quality. For example, the link quality information that IAB node 10C transmits may include a measurement result of the link quality between IAB node 10C and higher IAB node 10B (link BC), and a measurement result that is of the link quality between higher IAB nodes (link AB) and has been received from higher IAB node 10B. The measurement result of the link quality may be at least one of RSRP, RSRQ and SINR RSRP, RSRQ and SINR may be measured based on at least one of SSB and CSI-RS that higher IAB node 10C transmits, and the IAB node discovery signal (inter-node discovery signal). The measurement result of the link quality between the higher IAB nodes may include a measurement result of the link quality between higher IAB node 10B and IAB donor 10A, for example.

The link congestion degree information is information indicative of the congestion degree of the BH link. For example, the link congestion degree information that IAB node 10C transmits may include information which is about the link congestion degree of IAB node 10C and which the IAB node has, and information which is about the link congestion degrees of the higher IAB nodes 10B and 10A and which has been received from IAB node 10B. The information about the link congestion degree may include at least one of the resource utilization rate, the number of accommodated lower IAB nodes, the number of access UEs, and the amount of buffer, for example.

IAB node 10G may select the connection destination BH link based on the link-related information received from at least one of higher IAB nodes 10C, 10B and 10F and of the measurement results of the link quality and/or link congestion degree by this IAB node 10G, and may notify higher IAB node 10C of the selection result. For example, IAB node 10G selects, as the connection destination BH link, the BH link having the highest link quality and the minimum link congestion degree, among the paths to IAB donor 10A.

According to the above configuration, IAB node 10G is possible to appropriately select the connection destination BH link. Consequently, the communication efficiency (for example, the frequency usage efficiency) is improved.

IAB node 10C may notify another IAB node 10 of information where the information about the link quality and the information about the link congestion degree are bundled (including both elements), for example, information on the estimated average throughput of each link and/or the maximum delay, as the link-related information. For example, IAB node 10C estimates the throughput of each link based on the link quality and the average unused resource amount, and notifies another IAB node of the throughput as link-related information. IAB node 10G may determine whether to select the link as the path to IAB donor 10A or not, based on the notified link-related information.

IAB node 10C may notify another IAB node 10 of the link quality information, the link congestion degree information, and/or the link-related information that comprehensively includes these pieces of information, as information obtained by quantizing the information with a predetermined number of bits defined in the specifications. For example, IAB node 10C may separately notify another IAB node 10 of the peak throughput of the link and/or the total resource amount. Alternatively, IAB node 10G may implicitly recognize the link quality and the link congestion degree, from the separately notified configuration information or the like on the IAB node. The information quantized with the predetermined number of bits may be information normalized with the peak throughput and/or the total resource amount and the like.

IAB node 10C may transmit, to IAB node 10G, at least one (link-related information) of the link quality information, the link congestion degree information, and information comprehensively including these pieces of information, according to at least one method among the reference signal sequence, L1 control information, Medium Access Control (MAC) Control Element (CE), and Radio Resource Control (RRC) signaling. The L1 control information is information obtained by demodulation on layer 1, for example, Downlink Control information (DCI) and/or Uplink Control Information (UCI) and the like. MAC CE may be L2 control information. IAB node 10G may periodically perform measurement of the link quality, obtaining the link quality information, and/or obtaining the link congestion degree information, for neighboring multiple IAB nodes 10B, 10C and 10F. Use of a low-layer notification method is possible to reduce the amount of information, which is possible in turn to reduce the processing load. On the other hand, use of a high-layer notification method is possible to increase the amount of information, thereby allowing information to be notified correctly.

IAB node 10C may notify another IAB node 10 of the link quality information and/or link congestion degree information on each link to IAB donor 10A. Alternatively, IAB node 10C may notify another IAB node 10 of the total link quality information and/or link congestion degree information on all the links to IAB donor 10A, for example, link information serving as the lowest throughput. IAB node 10C may separately notify another IAB node 10 of the number of hops, or information on delay.

IAB node 10C may notify the link-related information according to at least one method among the following (B1) to (B3).
(B1) IAB node 10C periodically notifies another IAB node 10 of the link-related information together with a reference signal for measuring the link quality(inter-node discovery signal). The period of the notification may be identical to or different from the period of the notification about the reference signal for measuring the link quality.
(B2) IAB node 10C periodically notifies another IAB node 10 of the link-related information at timing different from that of the reference signal for measuring the link quality. The period of the notification may be identical to or different from the period of the notification about the reference signal for measuring the link quality.
(B3) In a case where a predetermined condition is satisfied or a case where a request is received, IAB node 10C notifies another IAB node 10 of the link-related information. The case where the predetermined condition is satisfied means, for example, a case where the congestion degree is higher than a predetermined threshold, a case where the link throughput is lower than a predetermined threshold, a case of possibility that appropriate determination is not available only based on the measurement result of the reference signal for measuring the link quality, or the like.

IAB node 10G may provide a report or notification to higher IAB node 10C according to at least one method of the following (C1) or (C2) (see FIG. 4).
(C1) IAB node 10G may select the link CG (higher IAB node 10C), and perform a link connection process for the selected higher IAB node 10C. IAB node 10G may report, to higher IAB node 10C, the information about the link congestion degree of this IAB node 10G.
(C2) IAB node 10G may report, to a temporary higher node 10C, the measurement result of the link quality and/or the information about the link congestion degree of this IAB node 10G. Higher IAB node 10C (or IAB donor 10A) may determine the connection relationship between the nodes, and notify lower IAB node 10G of the determination result. The information about the link congestion degree may be, for example, the number of connected lower IAB nodes, the number of access UEs, the amount of buffer and the like.

Referring to FIG. 4, a specific example is described.

IAB donor 10A generates the link congestion degree information that includes the link congestion degree measured by this IAB donor 10A, and transmits the information to lower IAB nodes 10B and 10E.

IAB node 10B bundles the link congestion degree information received from higher IAB donor 10A and the link congestion degree measured by this IAB node 10B to generate link congestion degree information, and transmits the information to lower IAB nodes 10C and 10G IAB node 10B generates the link quality information that includes the link quality of link AB measured by this IAB node 10B, and transmits the information to lower IAB nodes 10C and 10G. The link congestion degree information and the link quality information, which IAB node 10B transmits, may be bundled as the link-related information and transmitted.

IAB node 10C bundles the link congestion degree information received from higher IAB node 10B and the link congestion degree measured by this IAB node 10C to generate the link congestion degree information, and transmits the information to lower IAB nodes 10D and 10G. IAB node 10C bundles the link quality information received from higher IAB node 10B and the link quality of link BC measured by this IAB node 10C to generate link quality information, and transmits the information to lower IAB nodes 10D and 10G. The link congestion degree information and the link quality information, which IAB node 10C transmits, may be bundled as the link-related information and transmitted.

IAB node 10E bundles the link congestion degree information received from higher IAB donor 10A and the link congestion degree measured by this IAB node 10E to generate link congestion degree information, and transmits the information to lower IAB node 10F. IAB node 10E generates the link quality information that includes the link quality of link AE measured by this IAB node 10E, and transmits the information to lower IAB node 10F. The link congestion degree information and the link quality information, which IAB node 10E transmits, may be bundled as the link-related information and transmitted.

IAB node 10F bundles the link congestion degree information received from higher IAB node 10E and the link congestion degree measured by this IAB node 10F to generate link congestion degree information, and transmits the information to lower IAB node 10G IAB node 10F bundles the link quality information received from higher IAB node 10E and the link quality of link EF measured by this IAB node 10F to generate link quality information, and transmits the information to lower IAB node 10G. The link congestion degree information and the link quality information, which IAB node 10F transmits, may be bundled as the link-related information and transmitted.

IAB node 10G receives the link congestion degree information including the congestion degrees of IAB donor 10A and IAB node 10B, and the link quality information including the link quality of link AB, from higher node 10B. IAB node 10G receives the link congestion degree information including the link congestion degrees of IAB donor 10A, IAB node 10B and IAB node 10C, and the link quality information including the link qualities of link AB and link BC, from higher node 10C. IAB node 10G receives the link congestion degree information including the link congestion degrees of IAB donor 10A, IAB node 10E and IAB node 10F, and the link quality information including the link qualities of link AE and link EF, from IAB node 10F. IAB node 10G measures the link congestion degree of this IAB node 10G. IAB node 10G measures the link qualities of link CG, link BG and link FG Accordingly, IAB node 10G is possible to select the optimal connection destination BH link from among link BG, link CG and link FG, which serve as the candidate BH links, in consideration of the link congestion degree and/or the link quality of the path to IAB donor 10A.

### <Link selection in IAB donor 10A>

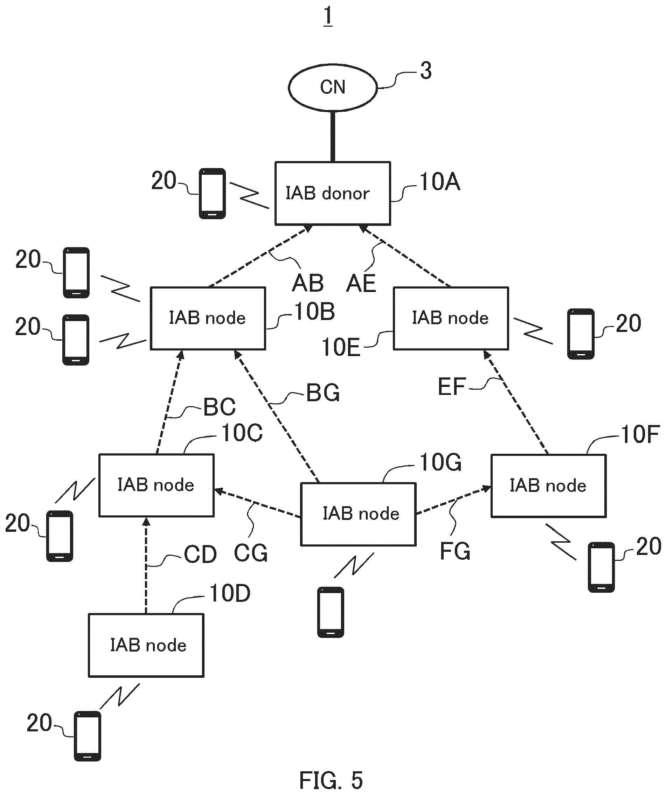

Referring to FIG. 5, a case where IAB donor 10A selects the connection destination BH link of IAB node 10G is described. The reference sign of the IAB node used in the following description is an example for illustration. Another reference sign may be adopted.

IAB node 10G measures at least one of the link quality information and the link congestion degree information between this IAB node 10G and higher IAB nodes 10C, 10B and 10F (that is, link CG, link BG and link FG), and reports the information to higher IAB node 10C.

IAB node 10G may periodically transmit the measured information as broadcast information. Alternatively, IAB node 10G may transmit the measured information as dedicated information based on a request issued by higher IAB node 10C (or UE 20).

The link quality information that IAB node 10C transmits to higher IAB node 10B may include the measurement result of the link quality between this IAB node 10C and higher IAB node 10B (link BC), and the measurement result of the link quality between IAB node 10C and lower IAB node 10G (link CG), which this IAB node 10C has received from lower IAB node 10G (or this IAB node 10C has measured). The measurement result of the link quality between IAB node 10C and higher IAB node 10B may be, for example, any of RSRP, RSRQ and SINR based on any of SSB, CSI-RS and the inter-node discovery signal, which higher IAB node 10B transmits. RSRP, RSRQ and SINR may be measured based on at least one of SSB, CSI-RS and the IAB node discovery signal (inter-node discovery signal), which higher IAB node 10C transmits.

The link congestion degree information that IAB node 10C transmits to higher IAB node 10B may include information about the link congestion degree of IAB node 10C, and information about the link congestion degree of lower IAB node 10G received from this lower IAB node 10G The information on the link congestion degree of the IAB node may be, for example, any one of the resource utilization rate, the number of accommodated lower nodes, the number of access UEs, and the amount of buffer.

IAB donor 10A may select the BH link (for example, link CG) at lower IAB node 10G based on the link quality information and the link congestion degree information received from lower IAB nodes 10B and 10E, and issue an instruction (a report) of the selection result to lower IAB node 10G. In this case, IAB node 10G may receive the instruction (report) and select connection destination BH link CG. Selection of the connection destination BH link of IAB node 10G is not necessarily performed by IAB donor 10A. Any of higher IAB nodes 10 with respect to this IAB node 10G may perform the selection instead.

IAB node 10G may issue a report of the link quality information and/or the link congestion degree information to temporary higher IAB node 10F, and the higher IAB node (for example, IAB donor 10A) may determine the connection relationship between the nodes and notify lower IAB node 10G of the determination result. The information about the link congestion degree of IAB node 10G may include, for example, the connected lower IAB nodes (none in FIG. 5), and/or the number of access UEs, the amount of buffer and the like. The determination result may include, for example, information indicating higher IAB node 10C and the lower IAB node (none in FIG. 5) with respect to IAB node 10G. In this case, IAB node 10G may receive the determination result and select the connection destination BH link.

IAB donor 10A may notify IAB node 10G of information indicating the link having the worst link quality, and/or of information indicating the link (or IAB node) having the highest link congestion degree. IAB node 10G may then exclude the link having the worst link quality and/or the link having the worst link congestion degree from selection of the connection destination BH link.

According to the above configuration, the higher IAB node (for example, IAB donor 10A) is possible to select an appropriate BH link to lower IAB node 10G, thereby improving the communication efficiency (for example, the frequency usage efficiency).

Referring to FIG. 5, a specific example is described.

IAB node 10D transmits the link congestion degree information that includes the link congestion degree measured by this IAB node 10D, to higher IAB node 10C. Furthermore, IAB node 10D transmits the link quality information that includes the link quality of link CD measured by this IAB node 10D, to higher IAB node 10C. The link congestion degree information and the link quality information, which IAB node 10D transmits, may be bundled as the link-related information and transmitted.

IAB node 10C bundles the link congestion degree information received from lower IAB node 10D and the link congestion degree measured by this IAB node 10C to generate link congestion degree information, and transmits the information to higher IAB node 10B. IAB node 10C bundles the link quality information received from lower IAB node 10D and the link quality of link BC measured by this IAB node 10C to generate link quality information, and transmits the information to higher IAB node 10B. The link congestion degree information and the link quality information, which IAB node 10C transmits, may be bundled as the link-related information and transmitted.

IAB node 10B bundles the link congestion degree information received from IAB node 10C and the link congestion degree measured by this IAB node 10B to generate link congestion degree information, and transmits the information to higher IAB donor 10A. IAB node 10B bundles the link quality information received from lower IAB node 10C and the link quality of link AB measured by this IAB node 10B to generate link quality information, and transmits the information to higher IAB donor 10A. The link congestion degree information and the link quality information, which IAB node 10B transmits, may be bundled as the link-related information and transmitted.

IAB node 10G transmits the link congestion degree information that includes the link congestion degree measured by this IAB node 10G to temporary higher IAB node 10F. Furthermore, IAB node 10G transmits the link quality information that includes the link qualities of link CG, link BG and link FG measured by this IAB node 10G to temporary higher IAB node 10F. The link congestion degree information and the link quality information, which IAB node 10G transmits, may be bundled as the link-related information and transmitted.

IAB node 10F bundles the link congestion degree information received from lower IAB node 10G and the link congestion degree measured by this IAB node 10F to generate link congestion degree information, and transmits the information to higher IAB node 10E. IAB node 10F bundles the link quality information received from lower IAB node 10G and the link quality of link EF measured by this IAB node 10F to generate link quality information, and transmits the information to higher IAB node 10E. The link congestion degree information and the link quality information, which IAB node 10F transmits, may be bundled as the link-related information and transmitted.

IAB node 10E bundles the link congestion degree information received from IAB node 10F and the link congestion degree measured by this IAB node 10E to generate link congestion degree information, and transmits the information to higher IAB donor 10A. IAB node 10E bundles the link quality information received from lower IAB node 10F and the link quality of link AE measured by this IAB node 10E to generate link quality information, and transmits the information to higher IAB donor 10A. The link congestion degree information and the link quality information, which IAB node 10E transmits, may be bundled as the link-related information and transmitted.

IAB donor 10A selects the optimal connection destination BH link to IAB node 10G from among link BG, link CG and link FG, which serve as the candidate BH links, based on the link congestion degree information and/or the link quality information received from lower IAB nodes 10B and 10E. IAB donor 10A then transmits the selection result to IAB node 10G IAB node 10G is connected to the BH link indicated by this selection result. Accordingly, IAB donor 10A is available to connect IAB node 10G to the optimal BH link.

### <Modification>

In the above description, IAB node 10 and UE 20 are discriminated from each other. However, the embodiment of the invention is not limited thereto. That is, IAB node 10 and UE 20 may be dealt with in an equivalent manner without being discriminated from each other. For example, UE 20 may be connected to existing IAB node 10 (or IAB donor 10A) instead of new IAB node 10. That is, the radio node may be any of IAB node 10, IAB donor 10A and UE 20, or another node. For example, the radio node may be represented as a terminal, a radio station, a relay node or the like.

In the above description, the access link and the backhaul link are discriminated from each other. However, the embodiment of the invention is not limited thereto. For example, the radio link between IAB node 10 and UE 20 may be an example of the backhaul link. The radio link between IAB nodes 10 may be an example of the access link. The representations of the access link and/or backhaul link are examples of various radio links. For example, the access link and/or backhaul link may be represented as a side link.

### <Conclusion of Disclosure>

A radio node according to an aspect is a radio node that is a first radio node among a plurality of radio nodes, including: a reception section configured to receive at least one of first information indicating qualities of a plurality of candidate links between the first radio node and a second radio node, and second information indicating congestion degrees of the candidate links, through any of the candidate links; and a control section configured to determine a candidate link used for establishing connection among the plurality of candidate links, based on at least one of the first information and the second information that are received.

According to the configuration, the candidate link used for establishing connection can be appropriately determined from among the plurality of candidate links based on at least one of the information indicating the qualities of the candidate links and the information indicating the congestion degrees of the candidate links.

The embodiments of this disclosure have thus been described.

### <Hardware Configuration>

The block diagrams used to describe the embodiments illustrate blocks based on functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or radio) connected, and the plurality of apparatuses may implement the functional blocks.

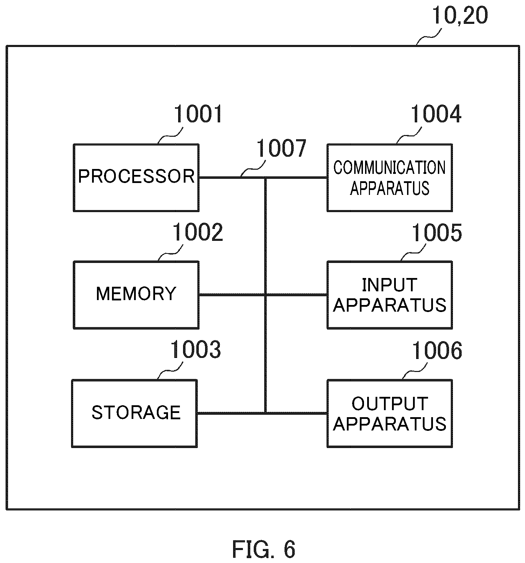

For example, IAB donor 10A, IAB node 10, UE 20, and the like according to an embodiment of the present invention may function as a computer that executes processing of a radio communication method of the present invention. FIG. 6 illustrates an example of a hardware configuration of IAB donor 10A, IAB node 10, and UE 20 according to an embodiment of the present invention. IAB donor 10A, IAB node 10, and UE 20 as described above may be physically constituted as a computer apparatus including processor 1001, memory 1002, storage 1003, communication apparatus 1004, input apparatus 1005, output apparatus 1006, bus 1007, and the like.

The term "apparatus" in the following description may be replaced with a circuit, a device, a unit, or the like. The hardware configurations of IAB donor 10A, IAB node 10, and UE 20 may include one apparatus or a plurality of apparatuses illustrated in the drawings or may not include part of the apparatuses.

The functions in IAB donor 10A, IAB node 10, and UE 20 are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 100, for-UE radio communication section 103, for-BH radio communication section 104 and the like, which have been described above, may be achieved by processor 1001.

Processor 1001 reads out a program (program code), a software module, or data from storage 1003 and/or communication apparatus 1004 to memory 1002 and executes various types of processing according to the read-out program or the like. The program used is a program for causing the computer to execute at least part of the operation described in the embodiments. For example, control section 100 may be implemented by a control program stored in memory 1002 and operated by processor 1001, and the other functional blocks may also be implemented in the same way. While it has been described that the various types of processing as described above are executed by one processor 1001, the various types of processing may be executed by two or more processors 1001 at the same time or in succession. Processor 1001 may be implemented by one or more chips. The program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 may save a program (program code), a software module, and the like that may be executed to carry out the radio communication method according to an embodiment of the present invention.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or radio network and is also called, for example, a network device, a network controller, a network card, or a communication module. For example, for-UE radio communication section 103, for-BH radio communication section 104 and the like, which have been described above, may be achieved by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, IAB donor 10A, IAB node 10, and user terminal 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

### <Notification and Signaling of Information>

The notification of information is not limited to the aspects or embodiments described in the present specification, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block), and SIB (System Information Block))), and other signals. The RRC signaling may be called an RRC message and may be, for example, an RRC connection setup message, an RRC connection reconfiguration message, or the like.

### <Applicable System>

The aspects and embodiments described in the present specification may be applied to a system using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or to a next-generation system extended based on the above systems.

### <Processing Procedure and the like>

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

### <Operations of Base Station>

Specific operations which are described in the specification as being performed by the base station may sometimes be performed by an upper node depending on the situation. Various operations performed for communication with a terminal in a network constituted by one network node or a plurality of network nodes including a base station may be obviously performed by the base station and/or a network node other than the base station (examples include, but not limited to, MME or S-GW). Although there is one network node in addition to the base station in the case illustrated above, a plurality of other network nodes may be combined (for example, MME and S-GW).

### <Direction of Input and Output>

The information, the signals, and the like may be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed by a management table. The input and output information and the like may be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variation and the like of aspects>

Each aspect/embodiment described in the present specification may be used solely or in a combined manner, or be switched and used in the case of execution. The predetermined information notification (for example, notification "the fact of being X") may be performed not only explicitly but also implicitly (for example, without the predetermined information notification).

While the present invention has been described in detail, it is obvious to those skilled in the art that the present invention is not limited to the embodiments described in the present specification. Modifications and variations of the aspects of the present invention may be made without departing from the spirit and the scope of the present invention defined by the description of the appended claims. Therefore, the description of the present specification is intended for exemplary description and does not limit the present invention in any sense.

### (Meaning and Interpretation of Terms)

### <Software>

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a radio technique, such as an infrared ray, a radio wave, and a microwave, the wired technique and/or the radio technique is included in the definition of the transmission medium.

### <Information and Signals>

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

The terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

### <" System" and "Network">

The terms "system" and "network" used in the present specification may be interchangeably used.

### <Names of Parameters and Channels>

The information, the parameters, and the like described in the present specification may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, PUCCH and PDCCH) and information elements (for example, TPC) may be identified by any suitable names, and various names assigned to these various channels and information elements are not limited in any respect.

### <Base Station>

The base station may accommodate one cell or a plurality of (for example, three) cells (also called sector). When the base station accommodates a plurality of cells, the entire coverage area of the base station may be divided into a plurality of smaller areas, and each of the smaller areas may provide a communication service based on a base station subsystem (for example, small base station for indoor, remote radio head (RRH)). The term "cell" or "sector" denotes part or all of the coverage area of the base station and/or of the base station subsystem that perform the communication service in the coverage. Furthermore, the terms "base station," "eNB," "cell," and "sector" may be interchangeably used in the present specification. The base station may be called a fixed station, a NodeB, an eNodeB (eNB), an access point, a femto cell, a small cell, or the like.

### <Mobile Station>

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client or by some other appropriate terms.

### <Meaning and Interpretation of Terms>

As used herein, the term "determining" may encompass a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

### <"Connected" and "Coupled">

The terms "connected" and "coupled" as well as any modifications of the terms mean any direct or indirect connection and coupling between two or more elements, and the terms may include cases in which one or more intermediate elements exist between two "connected" or "coupled" elements. The coupling or the connection between elements may be physical or logical coupling or connection or may be a combination of physical and logical coupling or connection. When the terms are used in the present specification, two elements may be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

### <Reference Signal>

The reference signal may also be abbreviated as RS and may also be called a pilot depending on the applied standard.

### <Meaning of "Based On">

The description "based on" used in the present specification does not mean "based only on," unless otherwise specifically stated. In other words, the description "based on" means both of "based only on" and "based at least on."

### <"First" and "Second">

Any reference to the element denoted as "first," "second" or the like used in the present specification does not generally limit the amount or order of the element. Such naming may be used in the present specification as a useful method of discriminating two or more elements from each other. Consequently, reference to the first and second elements does not mean that only two elements are adopted there, or the first element should precede the second element in a certain form.

### <"Means">

The "means" in the configuration of each apparatus may be replaced with "section," "circuit," "device," or the like.

### <Open Form>

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

### <Time Unit of TTI and the like, and Radio Frame Configuration>

The radio frame may be constituted by one frame or a plurality of frames in the time domain. The one frame or each of the plurality of frames may be called a subframe in the time domain. The subframe may be further constituted by one slot or a plurality of slots in the time domain. The slot may be further constituted by one symbol or a plurality of symbols (OFDM symbol, SC-FDMA symbol, or the like) in the time domain. The radio frame, the subframe, the slot, and the symbol indicate time units in transmitting signals. The radio frame, the subframe, the slot, and the symbol may be called by other corresponding names. For example, in the LTE system, the base station creates a schedule for assigning radio resources to each mobile station (such as frequency bandwidth that may be used by each mobile station and transmission power). The minimum time unit of scheduling may be called a TTI (Transmission Time Interval). For example, one subframe, a plurality of continuous subframes, or one slot may be called a TTI. The resource block (RB) is a resource assignment unit in the time domain and the frequency domain, and the resource unit may include one subcarrier or a plurality of continuous subcarriers in the frequency domain. In addition, the resource block may include one symbol or a plurality of symbols in the time domain, and may have a length of one slot, one subframe, or one TTI. One TTI and one subframe may be constituted by one resource block or a plurality of resource blocks. The structure of the radio frame is illustrative only, and the number of subframes included in the radio frame, the number of slots included in the subframe, the numbers of symbols and resource blocks included in the slot, and the number of subcarriers included in the resource block may be changed in various ways.

### <Maximum Transmission Power>

"Maximum transmission power" described in this embodiment means the maximum value of the transmission power, besides which, for example, the nominal maximum transmission power (the nominal UE maximum transmit power) or the rated maximum transmission power (the nominal UE maximum transmit power) may be adopted.

### <Article>

When articles, such as "a," "an," and "the" in English, are added by translation in the entire disclosure, the articles include plural forms unless otherwise clearly indicated by the context.

### Industrial Applicability

An aspect of this disclosure is useful for a radio communication system. Reference Signs List

1 Radio Communication System
10AIAB Donor
10B, 10C, 10D, 10E, 10F and 10G IAB Node
20 User Terminal
100 Control Section
102 Storage Section
103 For-UE Radio Communication Section
104 For-BH Radio Communication Section

## Claims

1. A radio node that is a first radio node among a plurality of radio nodes, the first radio node comprising:
a reception section that receives at least one of first information indicative of qualities of a plurality of candidate links between the first radio node and a second radio node and second information indicative of congestion degrees of the candidate links, through any of the candidate links; and
a control section that determines a candidate link used for establishing connection among the plurality of candidate links, based on at least one of the first information and the second information that are received.

2. The radio node according to claim 1, wherein the control section transmits the first information and the second information that are received, and the first information and the second information that are results of measurement in the first radio node, to a third radio node.

3. The radio node according to claim 1, wherein the control section determines the candidate link based on the first information and the second information that are received, and on the first information and the second information that are results of measurement in the first radio node.

4. The radio node according to claim 1, wherein the control section determines the candidate link used for establishing connection in the second radio node, based on the first information and the second information that are received, and controls establishment of connection of the determined candidate link.

5. A radio communication method, comprising:
receiving, by a first radio node that is one of a plurality of radio nodes, at least one of first information indicative of qualities of a plurality of candidate links between the first radio node and a second radio node and second information indicative of congestion degrees of the candidate links, through any of the candidate links; and
determining, by the first radio node, a candidate link used for establishing connection among the plurality of candidate links, based on at least one of the first information and the second information that are received.
